# EUROPÄISCHE PATENTSCHRIFT

(11) **EP 1 537 156 B1**
(45) Veröffentlichungstag und Bekanntmachung des Hinweises auf die Patenterteilung: **28.02.2007**
(21) Anmeldenummer: 03750465.1
(22) Anmeldetag: 29.08.2003
(51) Int. Cl.: C08G 18/08, C08F 2/24, C08G 18/75, C08G 18/32

(54) **HYBRIDDISPERSIONEN AUS POLYADDITIONSPRODUKTEN UND RADIKALISCHEN POLYMERISATEN**
HYBRID DISPERSIONS MADE OF POLYADDUCTS AND RADICAL POLYMERS
DISPERSIONS HYBRIDES COMPOSEES DE PRODUITS DE POLYADDITION ET DE POLYMERES RADICAUX

(30) Priorität: 04.09.2002 DE 10241294
(43) Veröffentlichungstag der Anmeldung: 08.06.2005
(73) Patentinhaber: BASF Aktiengesellschaft, 67056 Ludwigshafen (DE); Max-Planck-Gesellschaft zur Förderung der Wissenschaften e.V., 80539 München (DE)
(72) Erfinder: LICHT, Ulrike, 68309 Mannheim (DE); DEUTRICH, Susanne, 48165 Münster (DE); ANTONIETTI, Markus, 14558 Bergholz-Rehbrücke (DE); LANDFESTER, Katharina, 12203 Berlin (DE)
(86) Internationale Anmeldenummer: PCT/EP2003/009595
(87) Internationale Veröffentlichungsnummer: WO 2004/026932

(56) Entgegenhaltungen:
- WO-A-00/29451
- WO-A-00/29465
- WO-A-01/44334
- DE-A- 10 018 601
- DE-A- 10 037 656

## Beschreibung

Die vorliegende Erfindung betrifft Hybriddispersionen aus Polyadditionsprodukten und radikalischen Polymerisaten, dadurch erhältlich, dass man zunächst die jeweiligen Monomere, aus denen die Polyadditionsprodukte und die radikalischen Polymerisate aufgebaut sind, in Wasser emulgiert und anschließend die Polyaddition zur Herstellung der Polyadditionsprodukte und die radikalische Polymerisation zur Herstellung der radikalischen Polymerisate durchführt, wobei die jeweiligen Monomere in Wasser emulgiert werden, bevor 40 % der Monomere, aus denen die Polyadditionsprodukte bestehen, sich zu solchen Polyadditionsprodukten umgesetzt haben.

Weiterhin betrifft die vorliegende Erfindung ein Verfahren zur Herstellung der erfindungsgemäßen Hybriddispersionen sowie deren Verwendung als Bindemittel für Beschichtungsmittel oder Imprägnierungsmittel, in Klebstoffen, Lacken, Anstrichen, Papierstreichmassen oder als Bindemittel für Faservliese.

Hybriddispersionen beispielsweise aus Polyurethandispersionen und radikalischen Polymerisaten sind in der Technik bereits bekannt. Derartige Hybriddispersionen werden üblicherweise dadurch hergestellt, dass man von einer durch eingebaute ionische oder nichtionische wasserlösliche Gruppen stabilisierten Polyurethandispersion ausgeht und in deren Teilchen dann eine radikalische Polymerisation durchführt. Diese Hybriddispersionen sind aber wegen ihres aufwändigen Verfahrens, bei welchem zunächst ein Polyurethan erzeugt wird, dieses danach emulgiert wird und danach in Anwesenheit der dadurch erhaltenen Sekundärdispersion noch polymerisiert wird, sehr teuer. Außerdem weisen sie eine permanente Hydrophilie auf, welche daraus erhaltene Polymerfilme wasserempfindlich macht.

Aus dem Stand der Technik ist weiterhin bekannt, dass man in wässrigen Miniemulsionen sowohl radikalische Polymerisate (WO-A 00/29451) als auch Polyadditionsprodukte herstellen kann (WO-A 00/29465).

In der WO-A 01/44334 wird darüber hinaus beschrieben, Polyurethane in solchen wässrigen Miniemulsionen einzusetzen, welche Polyacrylate enthalten. Derartige Systeme weisen indes den Nachteil auf, dass diese immer ein mehrstufiges Herstellverfahren benötigen, wobei zunächst ein Polyadditionsprodukt hergestellt wird, welches danach zuerst emulgiert wird und in dessen Anwesenheit dann noch eine radikalische Miniemulsionspolymerisation durchgeführt wird. Bei solchen Hybriddispersionen stellt man weiterhin eine ungünstig erhöhte Viskosität der Monomerphase in Gegenwart der Polyadditionsprodukte fest, die u.a. eine breitere Teilchengrößenverteilung und größere Emulsionströpfchen bei der Emulsion z.B. mit Ultraschall verursachen. Ebenso ist man bei der Wahl der Additionsprodukte auf lineare, lösliche Materialien beschränkt, vernetzte Polymere können nicht eingesetzt werden. Die Ausbeute an Polyadditionsprodukten ist weiterhin nur begrenzt.

Der vorliegenden Erfindung lag daher die Aufgabe zu Grunde, den geschilderten Nachteilen abzuhelfen und verbesserte Hybriddispersionen bereitzustellen, welche über eine nicht zu breite Teilchengrößenverteilung verfügen, möglichst viele verschiedene Additionsprodukte aufweisen können, welche auch in höherer Ausbeute erhalten werden, wobei die Hybriddispersionen nach einem möglichst wenig aufwendigen Verfahren zugänglich sind.

Demgemäß wurden die eingangs definierten Hybriddispersionen gefunden. Weiterhin erstreckt sich die vorliegende Erfindung auch auf das Verfahren zur Herstellung der Hybriddispersionen und deren Verwendung als Bindemittel, u.a. für Beschichtungsmittel oder Imprägnierungen.

Die erfindungsgemäßen Hybriddispersionen aus Polyadditionsprodukten und radikalischen Polymerisaten sind dadurch erhältlich, dass man zunächst die jeweiligen Monomere, aus denen die Polyadditionsprodukte und die radikalischen Polymerisate aufgebaut sind, in Wasser emulgiert, d.h. die jeweiligen Monomere mit Hilfe üblicher Emulgatoren in eine wässrige Dispersion einbringt.

Im Anschluss daran erfolgt dann die eigentliche Polyaddition zur Herstellung der Polyadditionsprodukte und die eigentliche radikalische Polymerisation zur Herstellung der radikalischen Polymerisate. Die erfindungsgemäßen Hybriddispersionen sind auch dadurch charakterisiert, dass die jeweils benötigten Monomere in Wasser emulgiert werden, bevor 40 % der Monomere, aus denen die Polyadditionsprodukte bestehen, sich zu solchen Polyadditionsprodukten umgesetzt haben. Vorzugsweise sollten die jeweils zur Herstellung der Polyadditionsprodukte und der radikalischen Polymerisate benötigten Monomere bereits dann in Wasser emulgiert werden, bevor 30 %, empfehlenswert 20 %, besonders empfehlenswert 10 %, insbesondere 5 % und besonders bevorzugt 1 % derjenigen Monomere, aus denen die Polyadditionsprodukte bestehen, sich zu solchen Polyadditionsprodukten umgesetzt haben.

Geeignete Polyadditionsprodukte sind alle Polymerisate, welche durch eine entsprechende Polyadditionsreaktion erhalten werden können. Dazu zählen u.a. Polyurethane, die durch Umsetzung von Polyisocyanaten mit Verbindungen, welche isocyanat-reaktive Gruppen aufweisen, zugänglich sind.

Bei den Polyurethanen liegt das Verhältnis der diese aufbauenden Monomere, d.h. im wesentlichen der Polyisocyanate und der Verbindungen, welche isocyanat-reaktive Gruppen aufweisen, in einem solchen Bereich, dass das Verhältnis von Isocyanatgruppen (a) zu isocyanat-reaktiven Gruppen (b) 0,5 : 1 bis 5 : 1, insbesondere 0,8 : 1 bis 3 : 1, vorzugsweise 0,9 : 1 bis 1,5 : 1 und besonders bevorzugt 1 : 1 beträgt.

Als Polyisocyanate kommen vorzugsweise die in der Polyurethanchemie üblicherweise eingesetzten Diisocyanate in Betracht.

Insbesondere zu nennen sind Diisocyanate X(NCO)₂ wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomer sowie aus diesen Verbindungen bestehende Gemische. Besonders vorteilhaft sind dabei sterisch gehinderte Diisocyanate.

Geeignet sind als Polyisocyanate auch Nonantriisocyanat und Lysintriisocyanat sowie die Biurete der gängigen Diisocyanate.

Als Gemische dieser Isocyanate sind auch die Mischungen der jeweiligen Strukturisomeren von Diisocyanatotoluol und Diisocyanato-diphenylmethan von Bedeutung, insbesondere ist die Mischung aus 80 mol-% 2,4 Diisocyanatotoluol und 20 mol-% 2,6-Diisocyanatotoluol geeignet. Weiterhin sind die Mischungen von aromatischen Isocyanaten mit aliphatischen oder cycloaliphatischen Isocyanaten verwendbar, wobei das bevorzugte Mischungsverhältnis der aliphatischen zu aromatischen Isocyanate 4 : 1 bis 1 : 4 beträgt.

Als Verbindungen (a) kann man auch Isocyanate einsetzen, die neben den freien Isocyanatgruppen weitere verkappte Isocyanatgruppen, z.B. Isocyanurat-, Biuret-, Harnstoff-, Allophanat-, Uretdion- oder Carbodiimidgruppen tragen.

Beispielsweise geeignete isocyanat-reaktive Gruppen sind Hydroxyl-, Epoxy-, Thiol- sowie primäre und sekundäre Aminogruppen. Vorzugsweise werden hydroxylgruppenhaltige Verbindungen oder Monomere (b) verwendet. Daneben können auch noch aminogruppenhaltige Verbindungen oder Monomere (b3) verwendet werden.

Bevorzugt werden als Verbindungen oder Monomere (b) Diole verwendet.

Im Hinblick auf gute Filmbildung und Elastizität kommen als isocyanat-reaktive Gruppen enthaltende Verbindungen (b) vornehmlich höhermolekulare Diole (b1) in Betracht, die ein Molekulargewicht von etwa 500 bis 5000, vorzugsweise von etwa 1000 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62-65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und ggf., z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Alkenylbernsteinsäure, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Geeignete Diole sind ferner Tricyclodecandimethanol, [3(4) 8(9)-Bis(hydroxymethyl)tricyclo[5.2.1]decan sowie Dianole (ethoxylierte Bisphenol A-glycidylether).

Als Diole kommen z.B. Ethylenglykol, Propan-1,2-diol, Propan-1,3-diol, Butan-1,3-diol, Butan-1,4-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und Pentandiol-1,5. Diese Diole können auch als Diole (b2) direkt zur Synthese der Polyurethane verwendet werden.

Ferner kommen auch Polycarbonat-Diole (b1), wie sie z.B. durch Umsetzung von Phosgen mit einem Überschuss von den als Aufbaukomponenten für die Polyesterpolyole genannten niedermolekularen Alkohole erhalten werden können, in Betracht.

Geeignet sind auch Polyesterdiole (b1) auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind epsilon-Caprolacton, β-Propiolacton, γ-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des E-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen ggf. im Gemisch oder nacheinander, an Startkomponenten mit reaktionsfähigen Wasserstoffatomen, wie Alkohole oder Amine, z.B. Wasser, Ethylenglykol, Propan-1,2-diol, 1,2-Bis-(4-hydroxyphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine (b1), bevorzugt solche mit 2 endständigen Hydroxylgruppen, z.B. α-ω-Dihydroxypolybutadien, α-ω-Dihydroxypolymethacrylester oder α-ω-Dihydroxypolyacrylester als Monomere (b1). Solche Verbindungen sind beispielsweise aus der EP-A-0 622 378 bekannt. Weitere geeignete Polyole (b1) sind Polyacetale, Polysiloxane und Alkydharze.

Anstelle der Diole (b1) können grundsätzlich auch niedermolekulare isocyanat-reaktive Verbindungen mit einem Molekulargewicht von 62 bis 500, insbesondere 62 bis 200 g/mol eingesetzt werden. Vorzugsweise werden niedermolekulare Diole (b2) eingesetzt.

Als Diole (b2) werden vor allem als Aufbaukomponenten für die Herstellung von Polyesterpolyolen genannten kurzkettigen Alkandiole eingesetzt, wobei die verzweigten und unverzweigten Diole mit 2 bis 20 C-Atomen und einer gradzahligen Anzahl von C-Atomen sowie Pentan-1,5-diol bevorzugt werden. Außerdem kommen Phenole oder Bisphenol A oder F als Diole (b2) in Betracht.

Die Härte und der Elastizitätsmodul der Polyurethane läßt sich erhöhen, wenn als Diole (b) neben den Diolen (b1) noch die niedermolekularen Diole (b2) eingesetzt werden.

Bevorzugt beträgt der Anteil der Diole (b1), bezogen auf die Gesamtmenge der Diole b 0 bis 100, insbesondere 10 bis 100, insbesondere bevorzugt 20 bis 100 mol-%, und der Anteil der Monomeren (b2), bezogen auf die Gesamtmenge der Diole (b) 0 bis 100, insbesondere 0 bis 90, insbesondere bevorzugt 0 bis 80 mol-%. Besonders bevorzugt beträgt das Molverhältnis der Diole (b1) zu den Monomeren (b2) 1 : 0 bis 0 : 1, bevorzugt von 1 : 0 bis 1 : 10, besonders bevorzugt 1 : 0 bis 1 : 5.

Für die Komponente (a) und (b) können auch Funktionalitäten > 2 eingesetzt werden.

Beispiele geeigneter Monomere (b3) sind Hydrazin, Hydrazinhydrat, Ethylendiamin, Propylendiamin, Diethylentriamin, Dipropylentriamin, Isophorondiamin, 1,4-Cyclohexyldiamin oder Piperazin.

In untergeordneter Menge können auch monofunktionelle hydroxylgruppenhaltige und/oder aminogruppenhaltige Monomere eingesetzt werden. Ihr Anteil sollte 10 mol-% der Komponenten (a) und (b) nicht überschreiten. Darüber hinaus können in sehr geringen Anteilen als Monomere auch ionische oder nichtionische hydrophile Verbindungen eingesetzt werden. Vorzugsweise wird aber auf derartige Monomere verzichtet.

Weitere geeignete Polyadditionsprodukte sind u.a. die Reaktionsprodukte von Epoxiden beispielsweise mit Alkoholen, Thiolen, Aminen oder Säureanhydriden oder Carbonsäuren, sowie Kombinationen davon.

Hierbei sind insbesondere zu nennen das Reaktionsprodukt von Epoxidharzen mit Alkoholverbindungen mit zwei OH-Gruppen oder mit Dicarbonsäuren.

Beispiele für geeignete Epoxidverbindungen sind u.a. mono- oder multifunktionelle Glycidylether.

Vorzugsweise werden dabei insbesondere di- oder trifunktionelle Epoxidverbindungen eingesetzt, beispielsweise die entsprechenden Glycidylether. Besonders geeignete Epoxidverbindungen sind u.a. Bisphenol-A-diglycidylether der allgemeinen Formel (I) 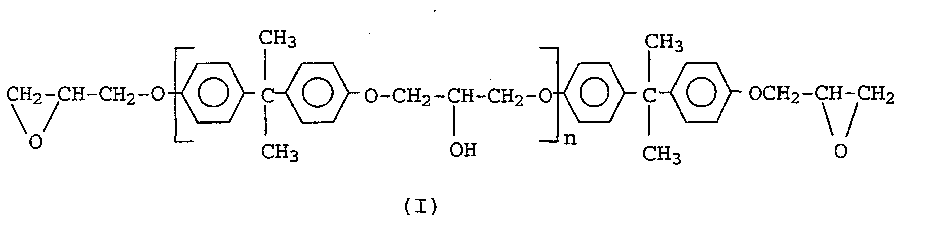 wobei n gleich 0 bis 15 bedeutet.

Das entsprechende Bisphenol-A-diglycidyletherderivat mit n=O wird beispielsweise als Handelsprodukt unter dem Namen Epicote® 828 von der Firma Shell vertrieben.

Weiter besonders geeignete Epoxidverbindungen sind u.a. Butandioldiglycidylether, Pentaerythrittriglycidylether, Neopentylglycoldiglycidether oder aber Hexandioldiglycidether. Es können auch wasserdispergierbare Epoxidverbindungen verwendet werden.

Allgemein betrachtet können als Epoxidverbindungen u.a. aromatische Glycidylverbindungen wie die Bisphenole A der Formel (I) oder ihre Bromderivate, ferner Phenolnovolak-glycidylether oder Kresolnovolak-glycidylether, Bisphenol-F-diglycidylether, Glyoxal-tetraphenoltetraglycidylether, N,N-Diglycidyl-anilin, p-Aminophenoltriglycid oder aber 4,4'-Diaminodiphenylmethantetraglycid eingesetzt werden.

Weiterhin eignen sich als Epoxidverbindungen u.a. cycloaliphatische Glycidylverbindungen wie beispielsweise Tetrahydrophthalsäurediglycidylester, Hexahydrophthalsäure-diglycidylester oder hydrierte Bisphenol-A-diglycidylether oder heterocyclische Glycidylverbindungen wie Triglycidylisocyanurat sowie Triglycidyl-bis-hydantoin.

Darüber hinaus können als Epoxidverbindungen auch cycloaliphatische Epoxidharze wie 3,4-Epoxycyclohexancarbonsäure-3'4'-epoxycyclohexylmethylester, Bis-(3,4-epoxy-cyclohexylmethyl)-adipat oder 3-(3',4'-Epoxycyclohexyl)-2,4-dioxa-spiro[5,5]-8,9-epoxyundecan sowie aliphatische Epoxidharze wie Butan-1,4-diol-diglycidylether oder Polypropylenglykol-425-diglycidylether verwendet werden.

Weitere geeignete Epoxide sind beispielsweise cycloaliphatische Bisepoxide, epoxidierte Polybutadiene, die durch Reaktion von handelsüblichen Polybutadienölen mit Persäuren bzw. organischen Säure-H₂O₂-Mischungen entstehen, Epoxidierungsprodukte von natürlich vorkommenden Fetten oder Ölen, sowie geeignete Acrylatharze mit selbstständigen Oxirangruppen.

Geeignete Alkohole sind für die Polyaddition mit Epoxiden insbesondere die bei der Herstellung der Polyurethan eingesetzten Diole (B).

Als Amine können für die Polyaddition mit Epoxiden insbesondere Verbindungen mit wenigstens zwei Aminfunktionen verwendet werden, beispielsweise Isophorondiamin, N-(2-Hydroxyethyl)-1,3-propan-diamin oder aber 3,3'-Dimethyl-4,4-diaminodicyclohexylmethan.

Als Polyadditionsprodukte mit Epoxiden können weiterhin insbesondere Verbindungen mit zwei Säureanhydriden oder mit zwei Carbonsäuren eingesetzt werden, beispielsweise Maleinsäure bzw. Maleinsäureanhydrid, Azelainsäure bzw. Dodecansäure oder aber Norcarandicarbonsäure bzw. Dimerfettsäuren oder Cyclohexandicarbonsäuren.

Bei den Polyadditionsprodukten mit Epoxiden liegt das Verhältnis der diese aufbauenden Monomere, d.h. der Epoxidverbindungen einerseits und der Alkohole, Amine, Carbonsäuren bzw. der Säureanhydride andererseits in einem solchen Bereich, dass das Verhältnis von Epoxidfunktionen einerseits und epoxid-reaktive Funktionen andererseits 0,2 : 1 bis 5 : 1, insbesondere 0,5 : 1 bis 2 : 1, vorzugsweise 0,8 : 1 bis 1,2 : 1 und besonders bevorzugt 1 : 1 beträgt.

Der mengenmäßige Anteil der Polyadditionsprodukte, bezogen auf die Summe der Anteile der Polyadditionsprodukte und der radikalischen Polymerisate, liegt vorzugsweise bei 1 bis 99 Gew.-%, insbesondere bei 5 bis 95 Gew.-% und besonders bevorzugt bei 10 bis 90 Gew.-%.

Die Polyadditionsreaktion wird vorzugsweise bei Temperaturen von 30 bis 120°C, insbesondere bei 40 bis 100°C durchgeführt. Sie wird im Regelfall durch eine Temperaturerhöhung gestartet. Es kann sich auch empfehlen, unter erhöhtem Druck zu arbeiten.

Geeignete radikalische Polymerisate sind alle Polymerisate, welche durch radikalische Polymerisation aus den entsprechenden radikalisch polymerisierbaren Monomeren erhalten werden können. Die radikalische Polymerisation wird dabei insbesondere bei Temperaturen von 20 bis 150°C, besonders bevorzugt bei Temperaturen von 40 bis 120°C durchgeführt. Die Polymerisation kann auch unter erhöhtem Druck erfolgen und strahlungsinduziert, insbesondere UVinduziert durchgeführt werden.

Bevorzugt ist das radikalische Polymerisat zu mindestens 40 Gew.-%, besonders bevorzugt zu mindestens 60 Gew.-% aus sogenannten Hauptmonomeren, ausgewählt aus C₁-C₂₀-Alkyl(meth)acrylaten, C₃-C₂₀-Cycloalkyl(meth)acrylate, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren aufgebaut.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt werden Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt; solche mit einer Doppelbindung sind z.B. Ethen oder Propen.

Neben diesen Hauptmonomeren kann das Polymerisat weitere Monomere, z.B. Hydroxylgruppen enthaltende Monomere, insbesondere C₁-C₁₀-Hydroxyalkyl(meth)acrylate, C₃-C₂₀-Hydroxy(cyclo)alkyl(meth)acrylate, (Meth)acrylamid, ethylenisch ungesättigte Säuren, insbesondere Carbonsäuren, wie (Meth)acrylsäure oder Itaconsäure, und deren Anhydride, Dicarbonsäuren und deren Anhydride oder Halbester, z.B. Maleinsäure, Fumarsäure und Maleinsäureanhydrid als Bestandteile enthalten. Ganz besonders bevorzugt sind C₁-C₁₀-Hydroxyalkyl(meth)acrylate.

Die erfindungsgemäßen Hybriddispersionen aus den Polyadditionsprodukten und den radikalischen Polymerisaten sind vorzugsweise dadurch erhältlich, dass die Polyaddition und die radikalische Polymerisation in einer wässrigen Miniemulsion durchgeführt wird, deren Monomertröpfchen eine Teilchengröße von nicht mehr als 1000 nm, bevorzugt nicht mehr als 500 nm, insbesondere von nicht mehr als 300 nm aufweist. Besonders bevorzugt liegen die Teilchengrößen der Monomertröpfchen bei einer Miniemulsion bei 50 bis 300 nm. Die feine Dispergierung der Monomertröpfchen bei einer Miniemulsion erfolgt durch einen mechanischen Energieeintrag in Form beispielsweise einer starken Scherung. Eine solche Scherung kann u.a. mit Hilfe zweier gegeneinander gerichteter Düsen in einer Mischkammer erfolgen. Weiterhin ist es möglich, die Scherung durch Anwendung von Ultraschall, beispielsweise durch einen Ultraschallstab, oder mit einem Düsenstrahldispergator durchzuführen.

Es kann den Monomeren bei einer Miniemulsion ein sog. Costabilisator zugesetzt werden, der durch geringe Wasserlöslichkeit und hohe Löslichkeit in den Monomeren gekennzeichnet ist.

Die Polymerisation bzw. die Polyaddition findet bei der Miniemulsionspolymerisation in den Monomertröpfchen selbst statt.

Die erfindungsgemäßen Hybriddispersionen sind dadurch erhältlich, dass die jeweiligen Monomere, aus denen die Polyadditionsprodukte und die radikalischen Polymerisate aufgebaut sind, in Wasser emulgiert werden und in dieser Emulsion auch die Polyadditionsreaktion bzw. die radikalische Polymerisation durchgeführt wird. Die wässrige Emulsion wird üblicherweise mit Hilfe geeigneter Emulgatoren und/oder Schutzkolloide bzw. Stabilisatoren aufgebaut. Es ist auch möglich, nur einen Teil der Monomere in Wasser zu emulgieren und den Rest später im Laufe der Reaktion hinzuzufügen, vorzugsweise über die Wasserphase.

Generell werden bei der Emulsionspolymerisation ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächeaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄ bis C₉), von Alkylsulfonsäuren (Alkylrest: C₁₂- bis C₁₈) und von Alkylarylsulfonsäuren (Alkylrest: C₉- bis C₁₈).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065 etc.

Die grenzflächenaktive Substanz wird üblicherweise in Mengen von 0,1 bis 10 Gew.-%, bezogen auf alle zu polymerisierenden Monomeren verwendet.

Wasserlösliche Initiatoren für die radikalische Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/ Eisen (II) sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässerigen Lösungen eingesetzt, wobei die untere Konzentration durch die in der Dispersion vertretbare Wassermenge und die obere Konzentration durch die Löslichkeit der betreffenden Verbindung in Wasser bestimmt ist.

Im allgemeinen beträgt die Konzentration 0,1 bis 30 Gew.-%, bevorzugt 0,5 bis 2,0 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,2 bis 5 Gew.-%, bezogen auf alle zu polymerisierenden Monomeren. Es können auch mehrere, verschiedene Initiatoren bei der Emulsionspolymerisation Verwendung finden.

Das Polymerisationsmedium für die Emulsion kann sowohl nur aus Wasser, als auch aus Mischungen aus Wasser und damit mischbaren Flüssigkeiten wie Aceton bestehen. Vorzugsweise wird nur Wasser verwendet. Die Herstellung der Hybriddispersionen kann sowohl als Batchprozeß als auch in Form eines Zulaufverfahrens, oder auch als kontinuierliches Verfahren, durchgeführt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Das ebenfalls erfindungsgemäße Verfahren zur Herstellung der erfindungsgemäßen Hybriddispersionen ist dadurch gekennzeichnet, dass man zunächst die jeweiligen Monomere, aus denen die Polyadditionsprodukte und die radikalischen Polymerisate aufgebaut sind, in Wasser emulgiert und anschließend die Polyaddition zur Herstellung der Polyadditionsprodukte und die radikalische Polymerisation zur Herstellung der radikalischen Polymerisate durchführt, wobei die jeweiligen Monomere in Wasser emulgiert werden, bevor 40 % der Monomere, aus denen die Polyadditionsprodukte bestehen, sich zu solchen Polyadditionsprodukten umgesetzt haben.

Das erfindungsgemäße Verfahren kann dabei in der Weise durchgeführt werden, dass man die Polyaddition und die radikalische Polymerisation zeitgleich durchführt. Weiterhin ist es möglich, beispielsweise durch Temperaturerhöhung, zuerst die Polyaddition durchzuführen und anschließend, zum Beispiel durch Zusatz von Initiatoren, die radikalische Polymerisation ablaufen zu lassen. Umgekehrt ist es ebenfalls möglich, zuerst die radikalische Polymerisation und danach die Polyaddition durchzuführen. Sowohl die Polyaddition als auch die radikalische Polymerisation finden dabei unter Erhalt der Teilchengröße des Emulgierschrittes statt.

Beide Reaktionen, d.h. die Polyaddition als auch die radikalische Polymerisation, können ungestört nebeneinander ablaufen, so dass zwei voneinander unabhängige Polymerisate entstehen. Durch geeignete Wahl der eingesetzten Monomere können aber auch die entsprechenden Copolymerisate hergestellt werden. Weiterhin können durch geeignete Reaktionsbedingungen auch Pfropfcopolymerisate entstehen. Verwendet man außerdem mehrfunktionelle Monomere, so erhält man u.a. semi-interpenetrierende Netzwerke oder vernetzte Strukturen.

Als Reaktoren zur Durchführung des erfindungsgemäßen Verfahrens zur Herstellung der Hybriddispersionen kommen die in der Polymerisationstechnik üblichen Apparate in Betracht, wobei Rührkessel bevorzugt verwendet werden, insbesondere dann, wenn für eine gute Wärmeabfuhr zu sorgen ist.

Die erfindungsgemäßen Hybriddispersionen eignen sich insbesondere als Bindemittel für Beschichtungsmittel oder Imprägnierungsmittel, z.B. für Klebstoffe, Lacke, Anstriche, Papierstreichmassen oder als Bindemittel für Faservliese, d.h. in allen Fällen, in denen eine Vernetzung und Erhöhung der inneren Festigkeit (Kohäsion) gewünscht ist.

Je nach Verwendungszweck kann die wässrige Dispersion Zusatzstoffe wie Verdicker, Verlaufshilfsmittel, Pigmente oder Füllstoffe, Fungizide, Lichtschutzmittel, Netzmittel, Rheologiehilfsstoffe, Entschäumer, Haftadditive oder Korrosionsschutzadditive enthalten. Die genannten Zusatzstoffe können auch direkt im Monomertropfen vorliegen.

Bei der Verwendung als Klebstoff können die Dispersionen neben obengenannten Zusatzstoffen noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Die erfindungsgemäßen Hybriddispersionen zeichnen sich u.a. durch eine nicht zu breite Teilchengrößenverteilung aus und können sehr viele verschiedene Additionsprodukte und radikalische Polymerisate enthalten. Überraschenderweise wurde ferner gefunden, dass u.a. sehr feinteilige Polyacrylate und Polystyrole auch zusammen mit hohen Anteilen an Polyurethanen in den erfindungsgemäßen Hybriddispersionen vorliegen können. Die Hybriddispersionen sind nach einem wenig aufwendigen, ebenfalls erfindungsgemäßen Verfahren zugänglich.

### Beispiele

### Beispiel 1

Eine Mischung aus 1,578 g Isophorondiisocyanat, 1,429 g Dodecandiol, 3 g Styrol und 250 mg Hexadekan wurden zu 24 g Wasser mit 180 mg Natriumdodecylsulfat gegeben. Die Mischung wurde eine Stunde bei höchster Magnetrührerstufe gemischt. Mit Hilfe eines Ultraschallstabs (Branson Sonifier W450, 90 % Amplitude für 2 Minuten) wurde die stabile Miniemulsion hergestellt. Die Miniemulsion wurde auf 60°C erhitzt. Nach 4 Stunden wurde dem System 60 mg Kaliumperoxodisulfat zugegeben und die Temperatur auf 72°C erhöht, um die radikalische Polymerisation zu starten. Nach 3 Stunden ist ein vollständiger Monomerumsatz erreicht. Die Teilchengröße beträgt 92 nm. Infrarotspektroskopische Untersuchungen zeigen den Umsatz der Isocyanatgruppen, gravimetrische Untersuchungen weisen die Umsetzung des Styrols nach. Im GPC werden zwei getrennte Peaks gefunden. Mit Hilfe der Transmissionselektronenmikroskopie wird eine homogene Partikelmorphologie detektiert.

### Beispiel 2

Wie Beispiel 1, statt Dodecandiol wurde Poly-Tetrahydrofuran 1000 verwendet. Die Teilchengröße beträgt 101 nm.

### Beispiel 3

Wie Beispiel 1, statt Styrol wurde Butylacrylat verwendet. Die Teilchengröße beträgt 98 nm.

### Beispiel 4

Eine Mischung aus 1,57 g Isophorondiisocyanat (IPDI), 1,3 g Dodecandiol, 185 mg Hydroxybutylacrylat, 3 g Butylacrylat und 250 mg Hexadekan wurden zu 24 g Wasser mit 180 mg Natriumdodecylsulfat gegeben. Die Mischung wurde eine Stunde bei höchster Magnetrührerstufe gemischt. Mit Hilfe eines Ultraschallstabs (Branson Sonifier W450, 90 % Amplitude für 2 Minuten) wurde die stabile Miniemulsion hergestellt. Die Miniemulsion wurde auf 60°C erhitzt. Nach 4 Stunden wurde dem System 60 mg Kaliumperoxodisulfat zugegeben und die Temperatur auf 72°C erhöht, um die radikalische Polymerisation zu starten. Nach 3 Stunden ist ein vollständiger Monomerumsatz erreicht. Die Teilchengröße beträgt 103 nm. Infrarotspektroskopische Untersuchungen zeigt den Umsatz der Isocyanatgruppen, gravimetrische Untersuchungen weisen die Umsetzung der Acrylate nach. Das entstandene Polymer ist unlöslich und quillt lediglich in Chloroform oder DMF.

### Beispiel 5

Wie Beispiel 4, die Monomermischung wird verändert, um höhere Vernetzungen zu erreichen.

| IPDI | Dodecandiol | Hydroxybutylacrylat | Partikelgröße |
|---|---|---|---|
| 1,57 g | 1,30 g | 185 mg | 103 nm |
| 1,57 g | 1,19 g | 340 mg | 93 nm |
| 1,57 g | 0,95 g | 680 mg | 110 nm |

## Patentansprüche

1. Hybriddispersionen aus Polyadditionsprodukten und radikalischen Polymerisaten, **dadurch** erhältlich, dass man zunächst die jeweiligen Monomere, aus denen die Polyadditionsprodukte und die radikalischen Polymerisate aufgebaut sind, in Wasser emulgiert und anschließend die Polyaddition zur Herstellung der Polyadditionsprodukte und die radikalische Polymerisation zur Herstellung der radikalischen Polymerisate durchführt, wobei die jeweiligen Monomere in Wasser emulgiert werden, bevor 40 % der Monomere, aus denen die Polyadditionsprodukte bestehen, sich zu solchen Polyadditionsprodukten umgesetzt haben.

2. Hybriddispersionen nach Anspruch 1, wobei diese **dadurch** erhältlich sind, daß die Polyaddition und die radikalische Polymerisation in einer wässrigen Miniemulsion durchgeführt werden, deren Monomertröpfchen eine Teilchengröße von nicht mehr als 1000 nm aufweist.

3. Hybriddispersionen nach den Ansprüchen 1 oder 2, wobei diese **dadurch** erhältlich sind, dass die jeweiligen Monomere in Wasser emulgiert werden, bevor 20 % der Monomere, aus denen die Polyadditionsprodukte bestehen, sich zu solchen Polyadditionsprodukten umgesetzt haben.

4. Hybriddispersionen nach den Ansprüchen 1 bis 3, wobei diese **dadurch** erhältlich sind, dass die jeweiligen Monomere in Wasser emulgiert werden, bevor 5 % der Monomere, aus denen die Polyadditionsprodukte bestehen, sich zu solchen Polyadditionsprodukten umgesetzt haben.

5. Hybriddispersionen nach den Ansprüchen 1 bis 4, wobei diese als Polyadditionsprodukte Polyurethane und Folyurethanharnstoffe enthalten.

6. Hybriddispersionen nach den Ansprüchen 1 bis 4, wobei diese solche Polyadditionsprodukte enthalten, die durch Reaktion von Epoxidgruppen mit Alkoholen, Säuren, Aminen oder Anhydriden entstehen.

7. Hybriddispersionen nach den Ansprüchen 1 bis 6, wobei diese solche radikalische Polymerisate aufweisen, die insgesamt zu mindestens 40 Gew.-% aus Hauptmonomeren bestehen, ausgewählt aus C₁ bis C₂₀ Alkyl(meth)acrylaten, C₃ bis C₂₀ Cycloalkyl(meth)acrylaten, Vinylaromaten mit bis zu 20 C-Atomen, Vinylestern von Carbonsäuren mit 1 bis 20 C-Atomen, ethylenisch ungesättigten Nitrilen, Vinylethern von 1 bis 10 C-Atome enthaltenden Alkoholen, vinylhalogeniden, aliphatischen Kohlenwasserstoffen mit 2 bis 8 C-Atomen und 1 oder 2 Doppelbindungen oder Mischungen dieser Monomeren.

8. Hybriddispersionen nach den Ansprüchen 1 bis 7, wobei der mengenmäßige Anteil der Polyadditionsprodukte, bezogen auf die Summe der Anteile der Polyadditionsprodukte und der radikalischen Polymerisate, bei 1 bis 99 Gew.-% liegt.

9. Verfahren zur Herstellung von Hybriddispersionen aus Polyadditionsprodukten und radikalischen Polymerisaten, **dadurch gekennzeichnet, dass** man zunächst die jeweiligen Monomere, aus denen die Polyadditionsprodukte und die radikalischen Polymerisate aufgebaut sind, in Wasser emulgiert und anschließend die Polyaddition zur Herstellung der Polyadditionsprodukte und die radikalische Polymerisation zur Herstellung der radikalischen Polymerisate durchführt, wobei die jeweiligen Monomere in Wasser emulgiert werden, bevor 40 % der Monomere, aus denen die Polyadditionsprodukte bestehen, sich zu solchen Polyadditionsprodukten umgesetzt haben.

10. Verfahren nach Anspruch 9, **dadurch gekennzeichnet, dass** die Polyaddition und die radikalische Polymerisation zeitgleich durchgeführt werden.

11. Verfahren nach Anspruch 9, **dadurch gekennzeichnet, dass** zuerst die Polyaddition und danach die radikalische Polymerisation durchgeführt wird.

12. Verfahren nach Anspruch 9, **dadurch gekennzeichnet, dass** zuerst die radikalische Polymerisation und danach die Polyaddition durchgeführt wird.

13. Verfahren nach den Ansprüchen 9 bis 12, **dadurch gekennzeichnet, dass** dieses in einer Miniemulsion durchgeführt wird, wobei die Miniemulsion mit Hilfe von Ultraschall oder mit Hilfe eines Dusenstrahlemulgators erzeugt wird.

14. Verfahren nach den Ansprüchen 9 bis 13, **dadurch gekennzeichnet, dass** die radikalische Polymerisation bei Temperaturen von 20 bis 150°C durchgeführt wird.

15. Verfahren nach den Ansprüchen 9 bis 14, **dadurch gekennzeichnet, dass** die Polyaddition bei Temperaturen von 30 bis 120°C durchgeführt wird.

16. Verfahren nach den Ansprüchen 9 bis 15, **dadurch gekennzeichnet, dass** die radikalische Polymerisation oder die Polyaddition unter erhöhtem Druck ausgeführt wird.

17. Verfahren nach den Ansprüchen 9 bis 16, **dadurch gekennzeichnet, dass** die Polymerisation strahlungsinduziert durchgeführt wird.

18. Verwendung der Hybriddispersionen gemäß einem der Ansprüche 1 bis 8 als Bindemittel für Beschichtungsmittel oder Imprägnierungsmittel.

19. Verwendung der Hybriddispersionen gemäß einem der Ansprüche 1 bis 8 als Bindemittel in Klebstoffen, Lacken, Anstrichen. Papierstreichmassen oder als Bindemittel für Faservliese.

## Claims

1. A hybrid dispersion comprising polyadducts and free-radical addition polymers, obtainable by first emulsifying the constituent monomers of said polyadducts and polymers in water and then conducting the polyaddition to prepare the polyadducts and the free-radical addition polymerization to prepare the polymers, the respective monomers being emulsified in water before 40% of the monomers of which the polyadducts are composed have reacted to form such polyadducts.

2. The hybrid dispersion according to claim 1, obtainable by conducting the polyaddition and the free-radical addition polymerization in an aqueous miniemulsion whose monomer droplets have a monomer particle size of not more than 1000 nm.

3. The hybrid dispersion according to claim 1 or 2, obtainable by emulsifying the respective monomers in water before 20% of the monomers of which the polyadducts are composed have reacted to form such polyadducts.

4. The hybrid dispersion according to claims 1 to 3, obtainable by emulsifying the respective monomers in water before 5% of the monomers of which the polyadducts are composed have reacted to form such polyadducts.

5. The hybrid dispersion according to claims 1 to 4, comprising polyurethanes and polyurethaneureas as polyadducts.

6. The hybrid dispersion according to claims 1 to 4, comprising polyadducts formed by reaction of epoxide groups with alcohols, acids, amines or anhydrides.

7. The hybrid dispersion according to claims 1 to 6, comprising free-radical addition polymers composed in total of at least 40% by weight of principal monomers selected from C₁ to C₂₀ alkyl (meth)acrylates, C₃ to C₂₀ cycloalkyl (meth)acrylates, vinylaromatics having up to 20 carbon atoms, vinyl esters of carboxylic acids having 1 to 20 carbon atoms, ethylenically unsaturated nitriles, vinyl ethers of alcohols comprising 1 to 10 carbon atoms, vinyl halides, aliphatic hydrocarbons having 2 to 8 carbon atoms and 1 or 2 double bonds, and mixtures of these monomers.

8. The hybrid dispersion according to claims 1 to 7, the proportion of the polyadducts based on the sum of the fractions of the polyadducts and of the free-radical addition polymers being from 1 to 99% by weight.

9. A process for preparing a hybrid dispersion comprising polyadducts and free-radical addition polymers, which comprises first emulsifying the constituent monomers of said polyadducts and polymers in water and then conducting the polyaddition to prepare the polyadducts and the free-radical addition polymerization to prepare the polymers, the respective monomers being emulsified in water before 40% of the monomers of which the polyadducts are composed have reacted to form such polyadducts.

10. The process according to claim 9, wherein the polyaddition and the free-radical addition polymerization are conducted at the same time.

11. The process according to claim 9, wherein first the polyaddition and then the free-radical addition polymerization is conducted.

12. The process according to claim 9, wherein first the free-radical addition polymerization and then the polyaddition is conducted.

13. The process according to claims 9 to 12, conducted in a miniemulsion generated by means of ultrasound or by means of a nozzle jet emulsifier.

14. The process according to claims 9 to 13, wherein the free-radical addition polymerization is conducted at temperatures of from 20 to 150°C.

15. The process according to claims 9 to 14, wherein the polyaddition is conducted at temperatures from 30 to 120°C.

16. The process according to claims 9 to 15, wherein the free-radical addition polymerization or the polyaddition is performed under superatmospheric pressure.

17. The process according to claims 9 to 16, wherein the addition polymerization is conducted with induction by radiation.

18. The use of a hybrid dispersion according to any of claims 1 to 8 as a binder for coating compositions or impregnating compositions.

19. The use of a hybrid dispersion according to any of claims 1 to 8 as a binder in adhesives, varnishes, paints or paper coating slips or as a binder for fiber webs.

## Revendications

1. Dispersions hybrides à base de produits de polyaddition et de polymères radicalaires, que l'on peut obtenir par le fait qu'on émulsionne tout d'abord dans l'eau les monomères respectifs à partir desquels les produits de polyaddition et les polymères radicalaires sont constitués et ensuite on effectue la polyaddition pour préparer les produits de polyaddition et la polymérisation radicalaire pour préparer les polymères radicalaires, les monomères respectifs étant émulsionnés dans l'eau avant que 40 % des monomères, à partir desquels les produits de polyaddition sont constitués, se soient transformés en de tels produits de polyaddition.

2. Dispersions hybrides suivant la revendication 1, qui peuvent être obtenues par le fait que la polyaddition et la polymérisation radicalaire sont effectuées dans une miniémulsion aqueuse dont les gouttelettes de monomère présentent une taille de particule qui n'est pas supérieure à 1000 nm.

3. Dispersions hybrides suivant la revendication 1 ou 2, qui peuvent être obtenues par le fait que les monomères respectifs sont émulsionnés dans l'eau avant que 20 % des monomères, à partir desquels les produits de polyaddition sont constitués, se soient transformés en de tels produits de polyaddition.

4. Dispersions hybrides suivant les revendications 1 à 3, qui peuvent être obtenues par le fait que les monomères respectifs sont émulsionnés dans l'eau avant que 5 % des monomères, à partir desquels les produits de polyaddition sont constitués, se soient transformés en de tels produits de polyaddition.

5. Dispersions hybrides suivant les revendications 1 à 4, qui contiennent, comme produits de polyaddition, des polyuréthannes et des polyuréthanne-urées.

6. Dispersions hybrides suivant les revendications 1 à 4, qui contiennent de tels produits de polyaddition qui sont obtenus par réaction de groupes époxy avec des alcools, des acides, des amines ou des anhydrides.

7. Dispersions hybrides suivant les revendications 1 à 6, qui présentent de tels polymères radicalaires qui sont constitués au total pour au moins 40 % en poids de monomères principaux choisis parmi des (méth)acrylates d'alkyle en C₁-C₂₀, des (méth)acrylates de cycloalkyle en C₃-C₂₀, des substances vinyl-aromatiques comportant jusqu'à 20 atomes de C, des esters vinyliques d'acides carboxyliques comportant 1 à 20 atomes de C, des nitriles éthyléniquement insaturés, des éthers vinyliques d'alcools contenant 1 à 10 atomes de C, des halogénures de vinyle, des hydrocarbures aliphatiques comportant 2 à 8 atomes de C et 1 ou 2 doubles liaisons ou des mélanges de ces monomères.

8. Dispersions hybrides suivant les revendications 1 à 7, dans lesquelles la fraction pondérale des produits de polyaddition, par rapport à la somme des fractions des produits de polyaddition et des polymères radicalaires, est de 1 à 99 % en poids.

9. Procédé de préparation de dispersions hybrides à base de produits de polyaddition et de polymères radicalaires, **caractérisé en ce qu'**on émulsionne tout d'abord dans l'eau les monomères respectifs à partir desquels les produits de polyaddition et les polymères radicalaires sont constitués et ensuite on effectue la polyaddition pour préparer les produits de polyaddition et la polymérisation radicalaire pour préparer les polymères radicalaires, les monomères respectifs étant émulsionnés dans l'eau avant que 40 % des monomères, à partir desquels les produits de polyaddition sont constitués, se soient transformés en de tels produits de polyaddition.

10. Procédé suivant la revendication 9, **caractérisé en ce que** la polyaddition et la polymérisation radicalaire sont effectuées simultanément.

11. Procédé suivant la revendication 9, **caractérisé en ce que** la polyaddition est tout d'abord effectuée et ensuite la polymérisation radicalaire.

12. Procédé suivant la revendication 9, **caractérisé en ce que** la polymérisation radicalaire est tout d'abord effectuée et ensuite la polyaddition.

13. Procédé suivant les revendications 9 à 12, **caractérisé en ce qu'**il est effectué dans une miniémulsion, la miniémulsion étant produite à l'aide d'ultrasons ou à l'aide d'un dispositif émulsionneur à jet.

14. Procédé suivant les revendications 9 à 13, **caractérisé en ce que** la polymérisation radicalaire est effectuée à des températures de 20 à 150°C.

15. Procédé suivant les revendications 9 à 14, **caractérisé en ce que** la polyaddition est effectuée à des températures de 30 à 120°C.

16. Procédé suivant les revendications 9 à 15, **caractérisé en ce que** la polymérisation radicalaire ou la polyaddition est effectuée sous pression élevée.

17. Procédé suivant les revendications 9 à 16, **caractérisé en ce que** la polymérisation est effectuée d'une manière induite par un rayonnement.

18. Utilisation des dispersions hybrides suivant l'une des revendications 1 à 8, comme liants pour des produits d'enduction ou des produits d'imprégnation.

19. Utilisation des dispersions hybrides suivant l'une des revendications 1 à 8, comme liants, dans des colles, des vernis, des peintures, des masses d'enduction de papier ou comme liants pour des non-tissés.
